# FASCICULE DE BREVET EUROPEEN

(11) **EP 2 648 837 B1**
(45) Date de publication et mention de la délivrance du brevet: **18.02.2015**
(21) Numéro de dépôt: 10805471.9
(22) Date de dépôt: 09.12.2010
(51) Int. Cl.: B01J 8/00, B65G 69/04

(54) **DISPOSITIF DE REMPLISSAGE D'UN RECIPIENT AVEC DES PARTICULES SOLIDES COMPORTANT UN DIAPHRAGME**
VORRICHTUNG ZUM FÜLLEN EINES BEHÄLTERS MIT FESTEN TEILCHEN MIT EINER MEMBRAN
DEVICE FOR FILLING A CONTAINER WITH SOLID PARTICLES COMPRISING A DIAPHRAGM

(43) Date de publication de la demande: 16.10.2013
(73) Titulaire: Crealyst, 72390 Semur En Vallon (FR)
(72) Inventeur: POUSSIN, Bernard, F-78420 Carrières sur Seine (FR); POUSSIN, Guillaume, F-78380 Bougival (FR)
(74) Mandataire: de la Bigne, Guillaume Michel Marie
(86) Numéro de dépôt international: PCT/FR2010/052659
(87) Numéro de publication internationale: WO 2012/076761

(56) Documents cités:
- EP-A1- 0 482 991
- FR-A1- 2 862 625

## Description

La présente invention concerne le domaine du remplissage de récipients par des particules solides telles que des grains ou des granulés. Ces récipients peuvent être par exemple, des réacteurs pour l'industrie pétrolière ou chimique ou des silos pour le stockage des céréales, d'engrais ou de tout autre produit sous forme de particules solides.

Le remplissage de tels récipients se fait par un transvasement des particules solides à partir de trémies ou entonnoirs, qui déversent les particules dans le récipient par l'entremise de manches souples ou de tuyaux rigides.

Généralement, on cherche à remplir le récipient avec le maximum de produit solide et à avoir une répartition des particules solides la plus homogène possible en terme de granulométrie afin de se rapprocher le plus possible du remplissage optimum déterminé théoriquement.

En effet, dans le cas de réacteurs chimiques notamment, il est intéressant d'avoir la masse la plus importante possible de catalyseur dans le réacteur afin de pouvoir espacer les arrêts de l'appareillage liés au remplacement du catalyseur. Il est également important d'avoir une répartition granulométrique homogène dans tout le réacteur afin d'éviter l'apparition de chemins préférentiels pour les réactifs devant passer à travers le lit de catalyseur, auquel cas seule une partie du catalyseur est utilisée. Il faut donc remplacer le catalyseur bien qu'une partie n'ait pas été utilisée, alors que ce catalyseur a un coût relativement important, car autrement, la réaction chimique désirée ne peut plus avoir lieu.

Il en va de même pour les silos de conservation des grains dans lesquels il faut pouvoir stocker la plus grande quantité possible de grains tout en évitant les phénomènes de ségrégation granulométrique, qui produisent des zones à plus forte densité que les produits conservateurs ne peuvent alors pas atteindre.

On cherche également à réduire le plus possible les abrasions et les chocs des particules solides entre elles ou avec le dispositif de remplissage afin d'éviter le plus possible la production de poussières fines néfastes au bon fonctionnement des équipements et à l'homogénéité de la répartition granulométrique des particules solides dans le récipient.

On connait de FR2862625 un dispositif de remplissage d'un récipient par des particules solides muni, sous la trémie, de tubes concentriques évasés vers le bas, et de tubes concentriques droits pouvant se déplacer verticalement les uns par rapport aux autres et permettant une meilleure répartition des particules solides dans le récipient.

Un problème réside dans le fait que, selon la taille des particules, certains tubes concentriques peuvent se boucher au cours du remplissage, du fait qu'ils ne sont pas suffisamment ouverts, si bien que le remplissage obtenu n'est pas optimum et que le contrôle des paramètres de remplissage est délicat.

La présente invention a notamment pour but de fournir un dispositif de remplissage de récipient fiable, efficace et simple à contrôler.

A cet effet, l'invention a notamment pour objet un dispositif de remplissage d'un récipient avec des particules solides comportant :
- des conduits annulaires de passage des particules pour une distribution homogène des particules dans le récipient, délimités par une pluralité de tubulures verticales disposées de façon coaxiale les unes par rapport aux autres, et
- un diaphragme, disposé en amont des conduits annulaires, pour la régulation du débit des particules dans les conduits annulaires,
caractérisé en ce que le diaphragme comprend une pluralité de volets d'obturation des conduits annulaires, obturant chacun un secteur angulaire d'un seul conduit annulaire, et en ce que le diaphragme comporte des moyens de commande du déplacement des volets d'obturation, configurés pour pouvoir obturer partiellement un conduit indépendamment des autres conduits.

Grâce à l'invention, on obtient un dispositif fiable de remplissage d'un récipient avec des particules solides, quelle que soit la taille des particules. La régulation du débit dans chaque conduit annulaire est réalisée à l'aide de volets d'obturation. Chaque conduit annulaire comprend une pluralité de volets d'obturation, au moins deux, recouvrant chacun un secteur angulaire du conduit d'obturation. En déplaçant ces volets les uns par rapport aux autres, pour un même conduit annulaire, on modifie l'ouverture du conduit annulaire par laquelle les particules solides peuvent passer, de façon à obturer au moins partiellement le conduit. On comprend que l'obturation d'un conduit annulaire peut être totale.

Ainsi, le diaphragme permet de contrôler le débit de particules solides dans chaque conduit annulaire de passage des particules de manière indépendante. L'obturation partielle d'un conduit n'a aucun effet sur l'obturation d'un autre conduit, notamment sur l'obturation de la partie d'un conduit adjacent dans la direction radiale se trouvant dans un même secteur angulaire que celui obturé par les volets d'obturation. En d'autres termes grâce au dispositif ci-dessus, on n'est pas tenu d'ouvrir tous les conduits dans une même proportion d'ouverture.

En contrôlant séparément le débit dans chaque conduit annulaire, on peut moduler de façon souple la répartition des particules solides dans chaque conduit annulaire et ainsi éviter des effets de bouchage de ces conduits.

On peut également moduler l'écoulement des particules dans chaque conduit annulaire au cours du temps afin de diminuer ou d'augmenter le débit de particules solides dans l'un ou l'autre conduit annulaire en fonction du remplissage du récipient. En effet, selon le remplissage du récipient, pour obtenir une répartition homogène des particules dans le récipient, il faut pouvoir augmenter le débit des particules solides dans certains conduits annulaires ou inversement le diminuer voire l'arrêter.

Par exemple, on peut ouvrir un conduit proche du centre dans une certaine proportion, suffisamment importante pour éviter un bouchage de particules et/ou pour avoir un débit plus élevé qu'à l'extérieur (les conduits proches du centre ayant généralement une section plus réduite que les conduits plus excentrés), tout en ouvrant un conduit proche de l'extérieur dans une proportion moins importante, de façon à permettre une répartition plus homogène dans tout le récipient (chaque zone du récipient, centrale ou excentrée, peut donc être remplie selon un débit similaire, bien que les conduits annulaires ne présentent pas la même surface).

Par ailleurs, on notera que les volets d'obturation, donc le diaphragme, sont orientés selon un plan sensiblement horizontal. Ainsi, il n'est pas nécessaire de déplacer verticalement les conduits l'un par rapport à l'autre. La section de passage des particules est donc horizontale et non verticale, ce qui augmente le débit et évite davantage des bouchages.

Ce dispositif permet également de fournir un dispositif standard pouvant s'adapter facilement à différentes géométries de particules solides. En effet, des particules solides ayant la forme de bâtonnets, c'est-à-dire une longueur importante par rapport à leur section par exemple, s'écouleront différemment de particules solides sphériques. Il peut alors être intéressant de fermer partiellement ou complètement un conduit annulaire tout en contrôlant le débit des particules solides passant dans les autres conduits. On notera qu'il peut être intéressant de fermer complètement un conduit pour adapter le remplissage à la taille du récipient. Notamment lorsque le récipient est relativement petit, on peut fermer le conduit extérieur pour éviter que trop de particules soient distribuées vers les bords du récipient.

Le dispositif peut en outre comporter l'une ou plusieurs des caractéristiques suivantes.
- Les moyens de commande comprennent au moins deux manivelles, chaque manivelle étant configurée pour commander l'obturation d'un seul conduit annulaire. Ainsi, chaque manivelle est propre à chaque conduit. En d'autres termes, les moyens de commande de l'obturation d'un conduit sont distincts des moyens de commande de l'obturation d'un autre conduit et chaque conduit a des moyens de commande qui lui sont propres. Cela permet un contrôle aisé de l'écoulement des particules solides dans chaque conduit annulaire.
- Le diaphragme comprend, pour chaque conduit annulaire, une armature circulaire portant une pluralité de volets répartis de façon homogène sur l'armature, le nombre de volets étant par exemple compris entre 2 et 20. Ainsi, la répartition des particules dans chaque conduit annulaire est plus homogène. En effet, les ouvertures du diaphragme pour chaque conduit annulaire sont réparties de manière uniforme surtout le conduit.
- Le diaphragme comprend au moins deux armatures circulaires de même diamètre montées pivotantes l'une par rapport à l'autre autour d'un même axe de rotation et aptes à obturer, au moins partiellement, un même conduit annulaire par pivotement de l'une par rapport à l'autre. Par exemple, l'une des armatures peut être montée fixe par rapport au dispositif et le simple déplacement de l'autre armature par rapport à la première armature par pivotement, contrôlé par les moyens de commande, permet d'obturer partiellement ou totalement un conduit.
- Le diaphragme comprend une même manivelle pour la commande du pivotement relatif de plusieurs armatures de même diamètre. Ainsi, pour l'obturation d'un seul conduit annulaire, le diaphragme peut comporter plusieurs armatures de même diamètre portant chacune des volets d'obturation agencés de façon à pouvoir pivoter l'une par rapport à l'autre pour obturer au moins partiellement le conduit annulaire. Le pivotement des armatures l'une par rapport à l'autre est commandé par un moyen de commande unique pour toutes les armatures de même diamètre. Ainsi, la commande d'ouverture ou d'obturation du conduit annulaire se fait de manière simple par l'actionnement d'une seule manivelle pour un conduit donné.
- Les volets d'obturation sont des parois rigides portées par au moins une armature et sont configurés pour obturer un secteur angulaire d'un seul conduit annulaire.
- Les volets d'obturation sont des parois souples portées par deux armatures circulaires de même diamètre montées pivotantes l'une par rapport à l'autre. Les volets d'obturation ont une extrémité fixe par rapport à la première armature et une extrémité opposée fixe par rapport à la seconde armature. Lorsque les deux extrémités sont proches l'une de l'autre, le conduit annulaire n'est pas obturé. Lorsque l'on désire réduire le débit des particules solides dans un conduit annulaire donné, on fait pivoter une armature par rapport à l'autre autour de leur axe commun et on déploie ainsi le volet d'obturation souple qui va s'ouvrir et obturer un secteur angulaire du conduit annulaire.
- L'extrémité aval des tubulures verticales est évasée afin de permettre un écoulement fluide des particules et d'éviter des brusques changements de direction des particules solides qui peuvent provoquer des pertes de charge et des frottements indésirables. En effet, on cherche à éviter que les frottements des particules entre elles ou avec le dispositif ne cassent les particules et créent de la poussière. Cette poussière est néfaste pour le bon fonctionnement du dispositif et pose des problèmes supplémentaires pour la répartition homogène des particules dans le récipient. Elle risque en outre de créer des régions dans lesquelles aucun produit (réactif et/ou produit de conservation) ne peut passer.
- Le dispositif comprend des jets de gaz placés au droit de l'extrémité aval des tubulures verticales, formant des moyens de propulsion des particules solides. Ces moyens de propulsion permettent de répartir les particules solides sur toute la section du récipient en propulsant ces particules vers les bords du récipient. On évite ainsi au maximum les frottements mécaniques des particules solides avec des pièces du dispositif.
- Le dispositif comprend des moyens de répartition des particules solides qui permettent de distribuer de manière homogène les particules solides lorsqu'elles quittent la partie évasée des tubulures.
- Les moyens de répartition comprennent au moins un plateau mobile en rotation portant à sa périphérie des brosses ou des poils souples et flexibles. On peut ainsi, sans avoir à augmenter la dimension du dispositif de répartition, remplir des récipients ayant un diamètre important comparé au diamètre du dispositif de remplissage.

La présente invention a également pour objet un procédé d'obturation d'un dispositif de remplissage d'un récipient avec des particules solides, au cours duquel on commande l'obturation au moins partielle d'un conduit annulaire, sans pour autant modifier l'obturation d'un autre conduit annulaire.

L'invention sera mieux comprise à la lecture de la description qui va suivre, donnée uniquement à titre d'exemple et faite en se référant aux dessins dans lesquels :
- la figure 1 est une vue schématique en coupe axiale d'un dispositif selon un mode de réalisation ;
- la figure 2 est une vue schématique en perspective d'un diaphragme du dispositif de la figure 1, dans lequel seuls les volets du conduit externe sont partiellement déployés ;
- la figure 3 est une vue schématique en perspective du diaphragme de la figure 2, dans lequel tous les volets sont fermés.

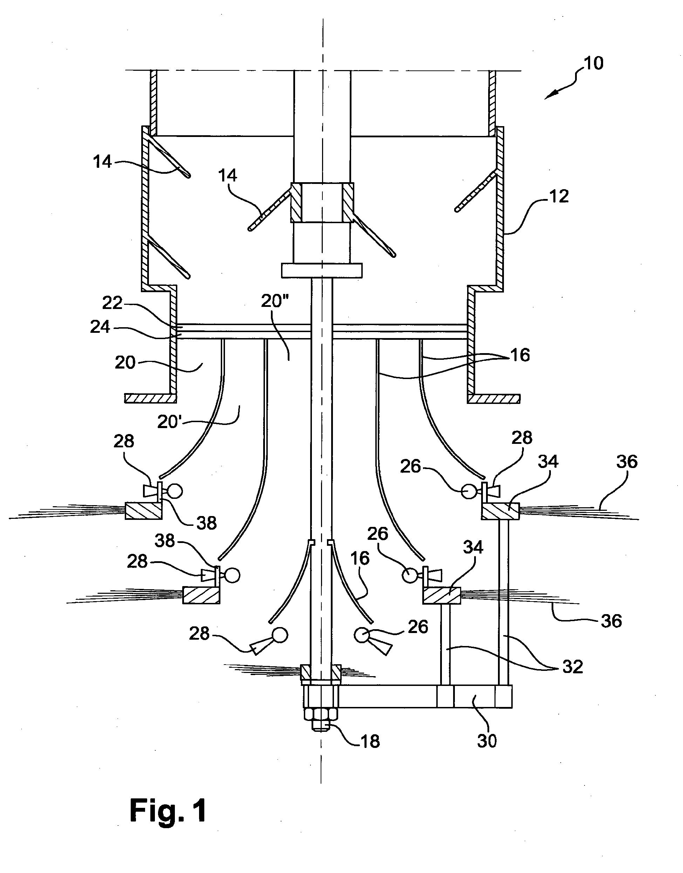

On a représenté sur la figure 1 un dispositif 10 de remplissage d'un récipient (non représenté) avec des particules solides comprenant un réservoir 12 recevant les particules solides en vrac. Dans cet exemple, les particules sont des granulés de catalyseur pour réacteur pétrochimique. On notera que le diamètre du récipient à remplir avec les particules solides peut être relativement grand comparé au diamètre du dispositif. Ainsi, le diamètre du récipient à remplir peut varier de 0,5 mètre à 15 mètres alors que le diamètre extérieur du dispositif peut être compris entre 0,1 mètre et 2,5 mètres.

Dans le mode de réalisation présenté ici, le réservoir 12 comprend des déflecteurs à brosses 14 qui permettent une répartition des particules solides en déviant l'écoulement et en provoquant un mélange des particules solides entre elles, avant qu'elles soient distribuées dans le récipient. En effet, l'écoulement des particules solides dans un réservoir tend à provoquer une ségrégation des particules : les plus longues vont préférentiellement vers les parois extérieures du réservoir alors que les plus courtes ont tendances à aller vers le centre du réservoir.

Ce réservoir 12 débouche, dans sa partie inférieure ou aval, sur une pluralité de tubulures verticales 16 disposées de façon coaxiale les unes par rapport aux autres.

On notera que l'on qualifie d'« aval » et d'« amont » les extrémités des éléments du dispositif en relation avec le sens d'écoulement des particules solides dans le dispositif.

Le dispositif 10 comprend également un axe central 18. Les parois du réservoir 12, les tubulures verticales 16 et l'axe central 18 définissent entre eux des conduits annulaires 20, 20', 20" de passage des particules. Dans cet exemple, le dispositif comprend 3 conduits annulaires 20, 20', 20" délimités par 3 tubulures verticales 16 et une tige centrale d'axe 18.

En amont des conduits annulaires 20, 20', 20" et donc des tubulures 16, le dispositif 10 comprend un diaphragme 22 pour la régulation du débit des particules dans les conduits annulaires. Ce dispositif comprend également, disposé sous le diaphragme 22, un support 24 de diaphragme ayant sensiblement la même forme que le diaphragme 22 et sur lequel les tubulures 16 sont attachées. Par exemple, les tubulures 16 peuvent être soudées sur le support 24. Des tubulures 16 peuvent également être attachées à l'axe central 18, comme on peut le voir à la figure 1.

L'extrémité aval des tubulures verticales 16 est évasé afin de permettre un écoulement fluide des particules et d'éviter des brusques changements de direction des particules solides qui peuvent provoquer des pertes de charge et des frottements indésirables.

Le dispositif peut également comprendre, à son extrémité aval, des moyens de propulsion et de répartition des particules solides.

Par exemple, les moyens de propulsion peuvent comprendre une pluralité de tubes circulaires 26 sensiblement horizontaux, situés au droit de l'extrémité aval des tubulures 16. En d'autres mots, ces tubes 26 sont situés à proximité de l'extrémité évasée des tubulures 16, plus précisément, en aval de cette extrémité. Les tubes 26 sont alimentés en gaz sous pression et perforés pour laisser passer des jets de gaz 28 vers l'extérieur du dispositif.

Ainsi, grâce à ces jets de gaz, les particules solides quittant la partie évasée des tubulures 16 sont propulsées, hors du dispositif de remplissage, afin d'atteindre toutes les régions du récipient. Grâce à ces moyens de propulsion, on évite de manière efficace les frottements mécaniques entre les moyens de propulsion et les particules solides permettant ainsi de réduire notamment la fragmentation des particules solides et/ou la formation de poussière.

Les moyens de répartition des particules solides peuvent comprendre un bras 30 porté par l'extrémité aval de l'axe central 18. Ce bras 30 porte des tiges 32 portant des anneaux circulaires 34 s'étendant principalement dans la direction horizontale. Ces anneaux 34 sont positionnés à proximité des extrémités évasées des tubulures 16 et de préférence, en aval des tubes circulaires 26. Préférentiellement, chaque anneau 34 porte sur sa surface externe, des déflecteurs à brosses 36, s'étendant dans la direction sensiblement horizontale.

Ces brosses 36, ainsi que les brosses 14, sont composées de poils souples et flexibles de géométrie variée.

Ces moyens de répartition permettent, lorsque l'axe central 18 est en rotation, de répartir les particules solides dans des récipients ayant un grand diamètre.

Chaque anneau 34 peut également porter, sur sa face interne, une paroi circulaire 38, sensiblement verticale et s'étendant vers l'amont, perforée d'une pluralité d'orifices répartis uniformément sur toute sa circonférence. Cette paroi 38 vient en vis-à-vis des jets de gaz 28 et permet, lorsque l'axe central 18 est en rotation, de laisser passer ou de bloquer le jet de gaz.

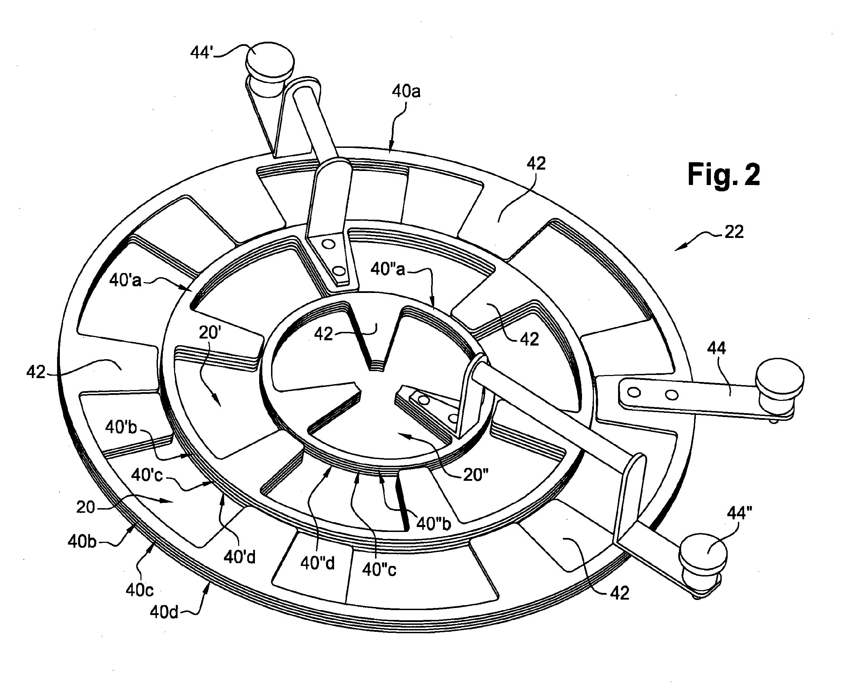

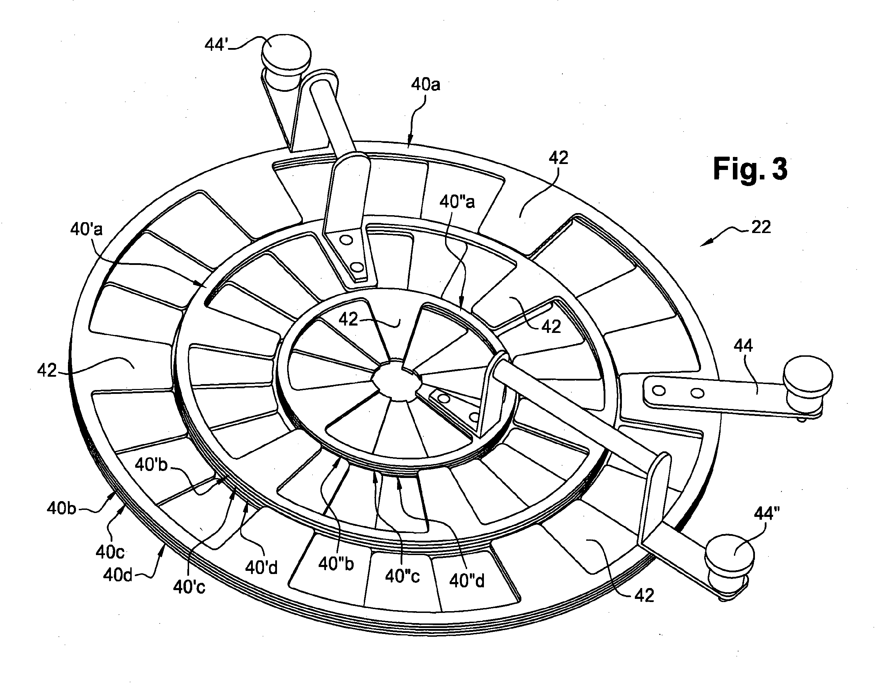

Les figures 2 et 3 illustrent le diaphragme 22. Le diaphragme 22 comprend, pour chaque conduit annulaire 20, 20', 20" de passage des particules solides, une pluralité d'armatures circulaires 40a, 40b, 40c, 40d, 40'a, 40'b, 40'c, 40'd, 40"a, 40"b, 40"c, 40"d. Ces armatures circulaires sont regroupées par armatures ayant le même diamètre, de façon à être superposées. Ainsi, les armatures 40a, 40b, 40c, 40d ont même diamètre, de même que les armatures 40'a, 40'b, 40'c, 40'd et les armatures 40"a, 40"b, 40"c, 40"d. Dans cet exemple, les armatures sont regroupées en 3 groupes de 4 armatures de même diamètre, chaque groupe d'armature correspondant à l'un des conduits annulaires 20, 20', 20" qu'il obture au moins partiellement, et son centre est confondu avec l'axe central 18. En d'autres termes, les armatures 40a, 40b, 40c, 40d ont un diamètre externe sensiblement identique au diamètre externe du conduit 20, les armatures 40'a, 40'b, 40'c, 40'd ont un diamètre externe sensiblement identique au diamètre externe du conduit 20' et les armatures 40"a, 40"b, 40"c, 40"d ont un diamètre externe sensiblement identique au diamètre externe du conduit 20". Par ailleurs, les armatures qui ont même diamètre, par exemple les armatures 40a, 40b, 40c, 40d sont montées pivotantes l'une par rapport à l'autre et comprennent chacune une pluralité de volets d'obturation 42 répartis de manière régulière le long de la circonférence de chaque armature 40a, 40b, 40c, 40d. Chaque volet 42 a une forme sensiblement trapézoïdale. Pour chaque conduit annulaire 20, 20', 20", une des armatures circulaires est montée fixe par rapport au dispositif, en l'occurrence les armatures 40d, 40'd et 40"d.

En outre, chaque volet 42 peut être délimité par un bord externe et un bord interne. Le bord externe de chaque volet appartient à l'armature qui porte le volet 42. Le bord interne de chaque volet 42 appartient à un cercle ayant un diamètre sensiblement identique au diamètre interne du conduit que le volet 42 obture au moins partiellement. Par exemple, un volet 42 porté par l'armature 40a de plus grand diamètre a pour bord externe une partie de l'armature 40a et présente un bord interne appartenant à un cercle ayant un diamètre sensiblement identique au diamètre interne du conduit 20, lui-même sensiblement confondu avec le diamètre externe du conduit adjacent 20'.

Chaque volet 42 obture donc un secteur angulaire d'un seul conduit annulaire 20, 20', 20". Ainsi, un volet 42 ne peut pas obturer, même partiellement, un conduit voisin du conduit dont il obture un secteur angulaire. Par exemple, un volet 42 obturant le conduit 20 ne peut pas obturer le conduit 20'.

Dans le mode de réalisation présenté aux figures 2 et 3, les volets 42 sont des parois rigides.

Le nombre de volets 42 portés par chaque armature peut varier entre 2 et 20. Par exemple, comme on peut le voir sur les figures 2 et 3, les armatures 40a, 40b, 40c, 40d ; 40'a, 40'b, 40'c, 40'd des deux conduits 20, 20' externes portent chacune six volets d'obturation 42, alors que les armatures 40"a, 40"b, 40"c, 40"d du conduit 20" le plus proche de l'axe central 18 en comprennent chacune trois. Le nombre et les dimensions des volets d'obturation 42 sont choisis en fonction de la taille du dispositif de remplissage, du récipient à remplir et des dimensions des particules solides.

Sur la figure 2, seuls les volets d'obturations 42 du conduit de passage 20 le plus à l'extérieur du diaphragme 22 sont partiellement déployés. Sur la figure 3, le diaphragme 22 ne laisse passer aucune particule solide dans les conduits 20, 20', 20", tous les volets 42 étant complètement déployés.

Pour chaque conduit annulaire 20, 20', 20", le diaphragme comprend en outre des moyens de commande du déplacement des volets d'obturation 42. Ces moyens sont par exemple des manivelles 44, 44', 44". Chaque manivelle 44, 44', 44" commande l'obturation d'un seul conduit annulaire 20, 20', 20" et est solidaire d'une armature 40a, 40'a, 40"a.

Par ailleurs pour chaque conduit annulaire 20, 20', 20", le diaphragme comprend une pluralité d'armatures circulaires dont l'une 40d, 40'd, 40"d est fixe par rapport à l'axe 18 et dont une autre 40a, 40'a, 40"a porte les moyens de commande 44, 44', 44" du déplacement des armatures.

Nous allons maintenant décrire le fonctionnement du diaphragme 22.

L'obturation d'un conduit annulaire 20, 20', 20" est obtenue par pivotement, l'une par rapport à l'autre, des armatures d'un même conduit annulaire 20, 20', 20". Pour simplifier, le fonctionnement est décrit pour le conduit 20 mais le même fonctionnement s'applique aux autres conduits.

En position d'ouverture maximale du conduit annulaire 20, les armatures 40a, 40b, 40c, 40d d'un même conduit annulaire sont disposées de telle sorte que les volets d'obturation 42 de chaque armature 40a, 40b, 40c, 40d sont superposés les uns aux autres. Ainsi, vu en élévation, on ne voit que l'armature 40a portant 6 volets d'obturation 42.

En outre, toujours pour un conduit annulaire 20 donné, chaque armature 40 comprend des moyens d'entrainement de l'armature qui lui est immédiatement adjacente, par exemple des butées respectives. Ainsi, lorsque l'on désire réduire le débit de particules solides s'écoulant dans un conduit annulaire 20 donné, on déplace la manivelle 44 dans le sens du déploiement des volets d'obturation 42, comme pour un éventail.

Par exemple lorsque l'on déplace la manivelle 44, solidaire de l'armature 40a, on entraine en rotation cette armature 40a qui pivote par rapport à l'armature 40b qui lui est adjacente jusqu'à ce que les moyens d'entrainement portés par ces deux armatures 40a, 40b coopèrent entre eux, c'est-à-dire lorsque la première armature 40a est complètement déployée par rapport à la deuxième armature 40b et que les volets d'obturation 42 de ces deux armatures sont déployés. La première 40a et la deuxième 40b armatures sont alors entrainées en rotation par rapport à la troisième armature 40c et se déploient jusqu'à ce que les moyens d'entrainement portés par la deuxième 40b et la troisième 40c armature coopèrent entre eux, et ainsi de suite jusqu'à déploiement complet des armatures 40a, 40b, 40c, 40d et donc des volets d'obturation 42.

Inversement, lorsque l'on désire augmenter le débit des particules solides passant dans un conduit annulaire, on déplace la manivelle 44, commandant le déplacement des volets d'obturation 42 dans le sens opposé.

Dans un autre mode de réalisation (non représenté), pour chaque conduit annulaire 20, 20', 20", le diaphragme 22 comprend uniquement deux armatures 40a, 40b qui comprennent une pluralité de volets d'obturation 42 souples. Ces volets 42 comportent chacun deux extrémités portées respectivement par une des armatures 40a et 40b. L'une des armatures 40b est fixe et l'autre armature 40a est mobile par rapport à la première armature 40b par pivotement de l'une par rapport à l'autre.

Lorsque l'on désire réduire le débit de particules solides passant dans un conduit annulaire 20, on déplace la manivelle 44 qui commande le déplacement des volets 42. Cette manivelle 44 est solidaire de l'armature 40a mobile et l'extrémité des volets 42 solidaire de l'armature 40a mobile se déplace avec cette armature 40a par rapport à l'extrémité des volets 42 solidaire de l'armature 40b fixe. On déploie alors, au moins partiellement, les volets d'obturation 42 d'un seul conduit annulaire 20. Lorsque l'on désire augmenter le débit des particules solides passant dans un conduit annulaire, on déplace la manivelle 44 dans le sens opposé.

On comprend que, grâce au dispositif décrit ci-dessus, on peut commander l'obturation des conduits 20, 20', 20" de façon indépendante d'un conduit à l'autre, grâce aux différentes manivelles 44, 44', 44".

On notera que l'invention n'est pas limitée aux modes de réalisation précédemment décrits. En particulier, les volets 42 pourraient avoir des parois souples. Par ailleurs, le nombre des conduits annulaires 20, 20', 20" peut varier, de même que le nombre d'armatures superposées de même diamètre telles que les armatures 40a, 40b, 40c, 40d.

## Revendications

1. Dispositif de remplissage d'un récipient avec des particules solides comportant :
- des conduits annulaires (20, 20', 20") de passage des particules pour une distribution homogène des particules dans le récipient, délimités par une pluralité de tubulures verticales (16) disposées de façon coaxiale les unes par rapport aux autres, et
- un diaphragme (22), disposé en amont des conduits annulaires (20, 20', 20"), pour la régulation du débit des particules dans les conduits annulaires (20, 20', 20"),
**caractérisé en ce que** le diaphragme (22) comprend une pluralité de volets d'obturation (42) des conduits annulaires (20, 20', 20"), obturant chacun un secteur angulaire d'un seul conduit annulaire (20, 20', 20"), et **en ce que** le diaphragme (22) comporte des moyens de commande (44, 44', 44") du déplacement des volets d'obturation (42), configurés pour pouvoir obturer partiellement un conduit indépendamment des autres conduits.

2. Dispositif selon la revendication 1, dans lequel les moyens de commande (44, 44', 44") comprennent au moins deux manivelles (44, 44', 44"), chaque manivelle (44, 44', 44") étant configurée pour commander l'obturation d'un seul conduit annulaire (20, 20', 20").

3. Dispositif selon l'une quelconque des revendications précédentes, dans lequel le diaphragme (22) comprend, pour chaque conduit annulaire (20, 20', 20"), une armature circulaire (40a, 40b, 40c, 40d, 40'a, 40'b, 40'c, 40'd, 40"a, 40"b, 40"c, 40"d) portant une pluralité de volets (42) répartis de façon homogène sur l'armature (40a, 40b, 40c, 40d, 40'a, 40'b, 40'c, 40'd, 40"a, 40"b, 40"c, 40"d), le nombre de volets étant par exemple compris entre 2 et 20.

4. Dispositif selon la revendication précédente, dans lequel le diaphragme (22) comprend au moins deux armatures circulaires (40a, 40b, 40c, 40d) de même diamètre montées pivotantes l'une par rapport à l'autre autour d'un même axe de rotation (18) et aptes à obturer, au moins partiellement, un même conduit annulaire (20) par pivotement de l'une par rapport à l'autre.

5. Dispositif selon la revendication précédente, dans lequel le diaphragme (22) comprend une même manivelle (44) pour la commande du pivotement relatif de plusieurs armatures (40a, 40b, 40c, 40d) de même diamètre.

6. Dispositif selon l'une quelconque des revendications précédentes, dans lequel les volets d'obturation (42) sont des parois rigides portées par au moins une armature (40a, 40b, 40c, 40d, 40'a, 40'b, 40'c, 40'd, 40"a, 40"b, 40"c, 40"d) et sont configurés pour obturer un secteur angulaire d'un seul conduit annulaire (20, 20', 20").

7. Dispositif selon l'une quelconque des revendications 1 à 5, dans lequel les volets d'obturation (42) sont des parois souples portées par deux armatures circulaires (40a, 40b) de même diamètre montées pivotantes l'une par rapport à l'autre et configurés pour obturer un secteur angulaire d'un seul conduit annulaire (20, 20', 20").

8. Dispositif selon l'une quelconque des revendications précédentes, comprenant des jets de gaz (28) placés au droit de l'extrémité aval des tubulures verticales (16), formant des moyens de propulsion des particules solides.

9. Dispositif selon l'une quelconque des revendications précédentes, comprenant des moyens de répartition (18, 30, 32, 34, 36) des particules solides.

10. Procédé d'obturation d'un dispositif selon l'une quelconque des revendications précédentes, au cours duquel on commande l'obturation au moins partielle d'un conduit annulaire (20, 20', 20"), sans pour autant modifier l'obturation d'un autre conduit annulaire (20, 20', 20").

## Patentansprüche

1. Vorrichtung zum Füllen eines Behälters mit festen Teilchen, aufweisend:
- ringförmige Leitungen (20, 20', 20") für den Durchfluss der Teilchen für eine gleichmäßige Verteilung der Teilchen in dem Behälter, die durch eine Vielzahl von vertikalen Stutzen (16) begrenzt sind, die relativ zueinander koaxial angeordnet sind, und
- eine Membran (22), die stromaufwärts der ringförmigen Leitungen (20, 20', 20") angeordnet ist, für die Regelung der Durchflussmenge der Teilchen in den ringförmigen Leitungen (20, 20', 20"),
**dadurch gekennzeichnet, dass** die Membran (22) eine Vielzahl von Verschlussklappen (42) der ringförmigen Leitungen (20, 20', 20") umfasst, die jeweils einen ringförmigen Sektor einer einzigen ringförmigen Leitung (20, 20', 20") verschließen, und dass die Membran (22) Mittel zum Steuern (44, 44', 44") der Bewegung der Verschlussklappen (42) aufweist, die ausgebildet sind, um eine Leitung unabhängig von den anderen Leitungen teilweise zu verschließen.

2. Vorrichtung nach Anspruch 1, wobei die Mittel zum Steuern (44, 44', 44") mindestens zwei Kurbeln (44, 44', 44") umfassen, wobei jede Kurbel (44, 44', 44") ausgebildet ist, um das Verschließen einer einzigen ringförmigen Leitung (20, 20', 20") zu steuern.

3. Vorrichtung nach einem der vorhergehenden Ansprüche, wobei die Membran (22), für jede ringförmige Leitung (20, 20', 20"), eine Ringverstärkung (40a, 40b, 40c, 40d, 40'a, 40'b, 40'c, 40'd, 40"a, 40"b, 40"c, 40"d) umfasst, die eine Vielzahl von Klappen (42) trägt, die gleichmäßig über die Verstärkung (40a, 40b, 40c, 40d, 40'a, 40'b, 40'c, 40'd, 40"a, 40"b, 40"c, 40"d) verteilt sind, wobei die Klappenzahl zum Beispiel zwischen 2 und 20 beträgt.

4. Vorrichtung nach dem vorhergehenden Anspruch, wobei die Membran (22) mindestens zwei Ringverstärkungen (40a, 40b, 40c, 40d) gleichen Durchmessers umfasst, die relativ zueinander um eine gemeinsame Drehachse (18) schwenkbar gelagert sind und angepasst sind, um eine gemeinsame ringförmige Leitung (20) durch Schwenkung mindestens teilweise zu verschließen.

5. Vorrichtung nach dem vorhergehenden Anspruch, wobei die Membran (22) eine gemeinsame Kurbel (44) für das Steuern der relativen Schwenkung mehrerer Verstärkungen (40a, 40b, 40c, 40d) gleichen Durchmessers umfasst.

6. Vorrichtung nach einem der vorhergehenden Ansprüche, wobei die Verschlussklappen (42) starre Wandungen sind, die mindestens von eine Verstärkung (40a, 40b, 40c, 40d, 40'a, 40'b, 40'c, 40'd, 40"a, 40"b, 40"c, 40"d) getragen werden und ausgebildet sind, um einen ringförmigen Sektor einer einzigen ringförmigen Leitung (20, 20', 20") zu verschließen.

7. Vorrichtung nach einem der Ansprüche 1 bis 5, wobei die Verschlussklappen (42) flexible Wandungen sind, die durch zwei Ringverstärkungen (40a, 40b) gleichen Durchmessers getragen werden, die relativ zueinander schwenkbar gelagert sind und ausgebildet sind, um einen ringförmigen Sektor einer einzigen ringförmigen Leitung (20, 20', 20") zu verschließen.

8. Verfahren nach einem der vorhergehenden Ansprüche, umfassend Gasströme (28), die rechtwinklig zu dem stromabwärtigen Ende der vertikalen Stutzen (16) angeordnet sind und Mittel zum Ausstoßen der festen Teilchen bilden.

9. Verfahren nach einem der vorhergehenden Ansprüche, umfassend Mittel zum Verteilen (18, 30, 32, 34, 36) der festen Teilchen.

10. Verfahren zum Verschließen einer Vorrichtung nach einem der vorhergehenden Ansprüche, in dessen Verlauf das mindestens teilweise Verschließen einer ringförmigen Leitung (20, 20', 20") gesteuert wird, ohne dadurch das Verschließen einer anderen ringförmigen Leitung (20, 20', 20") zu verändern.

## Claims

1. Device for filling a container with solid particles, the device comprising:
- annular ducts (20, 20', 20") for passing particles in order to dispense particles uniformly in the container, the ducts being defined by a plurality of vertical nozzles (16) arranged coaxially relative to one another; and
- a diaphragm (22) arranged upstream from the annular ducts (20, 20', 20") in order to regulate the flow of particles in the annular ducts (20, 20', 20");
the device being **characterized in that** the diaphragm (22) has a plurality of shutter flaps (42) for shutting off the annular ducts (20, 20', 20"), each shutting of an angular sector of a single annular duct (20, 20', 20"), and **in that** the diaphragm (22) has control means (44, 44', 44") for controlling the movement of the shutter flaps (42), and configured to enable any one duct to be shut off partially independently of the other ducts.

2. Device according to claim 1, wherein the control means (44, 44', 44") comprise at least two handles (44, 44', 44'), each handle (44, 44', 44") being configured to control the shutting off of a single annular duct (20, 20', 20").

3. Device according to any of the preceding claims, wherein, for each annular duct (20, 20', 20"), the diaphragm (22) comprises an annulus (40a, 40b, 40c, 40d, 40'a, 40'b, 40'c, 40'd, 40"a, 40"b, 40"c, 40"d) carrying a plurality of flaps (42) distributed in uniform manner on the annulus (40a, 40b, 40c, 40d, 40'a, 40'b, 40'c, 40'd, 40"a, 40"b, 40"c, 40"d), with the number of flaps lying for example in the range 2 to 20.

4. Device according to the preceding claim, wherein the diaphragm (22) has at least two annuluses (40a, 40b, 40c, 40d) of the same diameter mounted to pivot relative to each other about a common axis of rotation (18) and suitable for shutting off the same annular duct (20), at least in part, by pivoting relative to each other.

5. Device according to the preceding claim, wherein the diaphragm (22) has a single common handle (44) for controlling the relative pivoting of a plurality of same-diameter annuluses (40a, 40b, 40c, 40d).

6. Device according to any of the preceding claims, wherein each shutter flap (42) is a rigid wall carried by at least one annulus (40a, 40b, 40c, 40d, 40'a, 40'b, 40'c, 40'd, 40"a, 40"b, 40"c, 40"d) and configured to shut off an angular sector of a single annular duct (20, 20', 20").

7. Device according to any one of claims 1 to 5, wherein each shutter flap (42) is a flexible wall carried by two same-diameter annuluses (40a, 40b) mounted to pivot relative to each other, each flap being configured to shut off an angular sector of a single annular duct (20, 20', 20").

8. Device according to any of the preceding claims, including jets of gas (28) placed in register with the downstream ends of the vertical nozzles (16) and forming means for propelling solid particles.

9. Device according to any preceding claim, including solid particle distributor means (18, 30, 32, 34, 36).

10. Method of shutting off a device according to any of the preceding claims, in which any one annular duct (20, 20', 20") is shut off at least in part without thereby modifying the extent to which any other annular duct (20, 20', 20") is shut off.
